# EUROPEAN PATENT SPECIFICATION

(11) **EP 3 650 607 B1**
(45) Date of publication and mention of the grant of the patent: **13.09.2023**
(21) Application number: 19207395.5
(22) Date of filing: 06.11.2019
(51) Int. Cl.: E04B 1/21, E04B 1/41

(54) **CONCRETE EMBEDDABLE CORBEL SYSTEM**
BETONEINBETTBARES KRAGUNGSSYSTEM
SYSTÈME D'ENCORBELLEMENT ENCASTRABLE DANS LE BÉTON

(30) Priority: 06.11.2018 US 201816181712
(43) Date of publication of application: 13.05.2020
(73) Proprietor: ALP Supply, Inc., Fairless Hills PA 19030 (US)
(72) Inventor: Jablonsky, David S., Fairless Hills, PA Pennsylvania 18977 (US)
(74) Representative: Hoffmann Eitle

(56) References cited:
- CN-U- 204 098 232
- CN-U- 204 983 156
- US-B1- 6 494 639
- Meadow Burke LLC: "MB RapidLok 720p 2", , 9 May 2016 (2016-05-09), pages 1-3, XP054980323, Retrieved from the Internet: URL:https://www.youtube.com/watch?v=j3StuH 3mw_s [retrieved on 2020-03-24]

## Description

The present invention is directed to a mount, which may be embedded in a concrete component, for supporting a ledge. The mount has a plate with keyhole slots therein and a plurality of anchors extending from the back of the plate. The ledge has a back plate with corresponding studs, for engaging the keyhole slots in the mount. Together, the mount and ledge comprise a corbel system, which can support a beam.

### Background of the Invention

Various prior art devices have been developed to connect one precast concrete component to another. For example, a corbel may be supported by a vertical precast concrete component, so that the corbel may in turn support a beam.

Newkirk - US Patent No. 5,881,519 discloses a housing assembly with concrete panels that are connected together by angle brackets. The brackets may have a plate with support studs, which are embedded in the concrete.

Friend - US Patent No. 6,494,639 B1 discloses a primary connector for pre-cast structures. Anchors extend backward from a support plate and are embedded in a concrete panel. Keyhole slots in the plate are engaged by studs extending from a second plate, to connect the panel to a concrete floor. The anchors are positioned near the peripheral edges of the support plate. This document discloses features falling under the preamble of claim 1.

The Rapid-Lok^{®} Connection Plate System is comprised of a plate having four or more anchors embedded in a precast concrete structural wall. The plate has a plurality of keyholes that are engaged by studs extending from the back of a ledge. The anchors extend from the back of the plate in a rectangular arrangement.

A corbel may be employed to support a relatively heavy concrete beam, such as a double tee used for roofs, parking decks and bridge overpasses. The weight of the beam generates various tensile and shear stresses on the mount supporting the ledge, which is embedded in a vertical concrete component. Additionally, the weight of the beam generates torque, which may cause the mount plate to bow outward under the load, for example, if the force is transferred to the interior of the plate by studs extending from the ledge.

### Summary of the Invention

A mount for a corbel system is provided having a plate with a plurality of keyhole slots extending through the plate, from front to back. The plate is characterized by a top edge, bottom edge and first and second side edges. A plurality of anchors extend from the back of the plate. Each anchor has one end attached to the back of the plate and an opposite end extending away from the back of the plate. The anchors may be embedded in a concrete component, typically a precast concrete component for use as a vertical support in a structure, with the plate parallel to the face of the concrete component. Each of the anchors may be provided with a "foot" or other structure designed to increase its pull-out strength, that is, the force required to pull the anchor from the concrete after the concrete sets, and a rod, extending between the anchor's point of attachment to the back plate and the foot. The rod may be provided with projections along its length to improve pull-out strength. By way of example, headed rebar may be used as the anchor.

Four peripheral anchors are provided, and the point of attachment of each anchor to the back of the plate represents a vertex. Taken together, the four vertices define a convex quadrilateral, that is, a four sided polygon having interior angles that are less than 180° and whose diagonals lie inside of the quadrilateral. Additionally, a fifth anchor is provided and the point of attachment of the fifth anchor to the back of the plate is positioned within a perimeter of the convex quadrilateral defined by the vertices of the four anchors. The addition of the fifth anchor was found to increase the maximum load of the corbel system, i.e. the mount and ledge combination, by over 45%.

The keyhole slots may be characterized as having an entry hole, that is, the relatively wide end through which the head of a stud passes, and a narrow end, that is, the terminus in the slot where the shaft of the stud is seated. As used herein, the location or position of a keyhole in a plate is the center of the shaft of a stud, when the shaft is seated in the narrow end of the keyhole.

In one embodiment of the invention, first and second keyhole slots are positioned within the perimeter of the convex quadrilateral defined by the four peripheral anchors. The point of attachment of the fifth anchor may be positioned laterally between the first and second keyholes. As used herein, the term positioned laterally between keyholes means that the one keyhole is closer to one side edge of the plate than the point of attachment of the fifth anchor and the other keyhole is closer to the opposite side edge of the plate than the point of attachment of the fifth anchor. In another embodiment of the invention, third and fourth keyhole slots are positioned within the perimeter of the convex quadrilateral defined by the four peripheral anchors and the point of attachment of the fifth anchor is laterally positioned between the first and second keyhole slots and the third and fourth keyhole slots.

The convex quadrilateral defined by the four peripheral anchors may be characterized by a vertex centroid. The vertex centroid is the intersection of the line segments connecting the midpoints of the opposite sides of the quadrilateral, that is, the bimedians. In one embodiment of the invention, the point of attachment of the fifth anchor is positioned between the top edge of the plate and the vertex centroid. In another embodiment of the invention, the first and second keyholes are positioned between the top edge of the plate and the vertex centroid.

Also within the scope of the invention is a structure for supporting a beam having the above described mount embedded in an upright concrete component. For example, the concrete component may have a vertical face and the anchors of the mount are cast into the concrete, with the plate of the mount parallel to and flush with the face of the concrete component. A ledge is provided with a back plate and a plurality of studs extending from the back plate. Each of the studs has a shaft, with a head at an end of the shaft opposite the back plate. The end of the shaft opposite the head is attached to the backplate, and for additional support, the shaft may extend through the back plate and protrude from the outer face of the back plate. The studs are attached to the back plate in positions corresponding to the locations of the keyholes in the mount plate. It can be understood that the heads of the studs are inserted in the entry hole of the keyhole and slid downward until the shaft is seated in the narrow end of the keyhole.

The ledge includes a base for supporting the beam, which may be attached to the back plate, for example, at the top edge of the back plate. A gusset extends from the back plate to the base to support the base at the desired angle, typically in a horizontal orientation.

The invention has been described with the mount plate incorporating keyhole slots and the backplate of the ledge incorporating studs, corresponding to the keyhole slots. It can be understood that the invention may also be practiced with the locations of the keyhole slots and studs reversed, that is, (i) the mount plate may be provided with studs extending from its front,
and (ii) the back plate of the ledge may be provided with keyhole slots with the entry hole of the slots oriented downward. Furthermore, in the embodiment of the invention first described, which features various relative orientation of the anchors, keyhole slots and mount plate, the word "stud" can be substituted for "keyhole" in the embodiment having studs extending from the mount plate.

### Brief Description of the Drawings

Figure 1 is a perspective view of the upper front of the mount.
Figure 2 is a side view of the mount.
Figure 3 is a front view of the mount.
Figure 4 is a side view of the ledge.
Figure 5 is a front view of the ledge.
Figure 6 is an exploded perspective view of a concrete component having the mount embedded therein, the ledge and a beam supported by the ledge.
Figure 7 is a side view of the assembled corbel system incorporated in the concrete component, with the beam supported by the ledge.
Figure 8 is a perspective view of the upper front of the mount having six keyhole slots.
Figure 9 is a back view of the mount shown in Figure 8.
Figure 10 is a side view of the ledge having six studs positioned to engage the six keyhole slots in the mount of Figures 8 and 9.
Figure 11 is a front view of the ledge of Figure 10.

### Detailed Description of the Invention

Without intending to limit the scope of the invention, the preferred embodiments and features are hereinafter set forth.

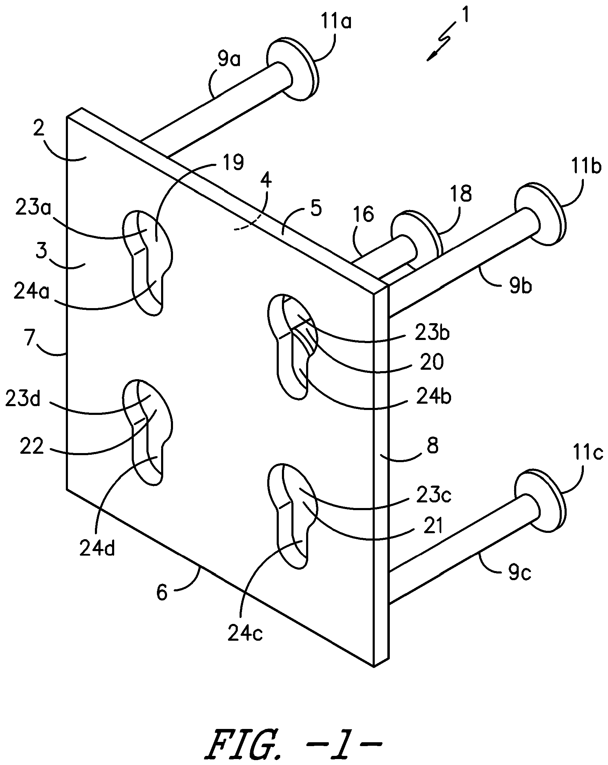

Referring to Figure 1-3, mount 1 has plate 2, front 3, back 4, top edge 5, bottom edge 6, side edge 7 and opposite side edge 8. Anchors 9a, 9b, 9c and 9d are attached to the back 4 of plate 2 at points of attachment 10a, 10b, 10c and 10d, respectively. Opposite the points of attachment, each of anchors 9a, 9b, 9c and 9d is provided with a foot, identified as 11a, 11b, 11c and 11d, respectively, to increase the pull out force required to remove the anchors, when the anchors are embedded in a concrete component.

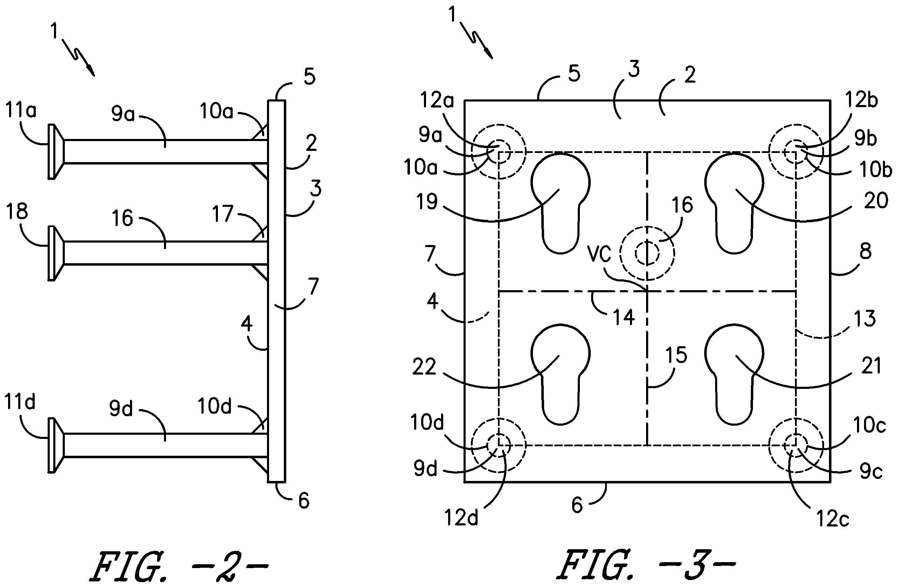

The four anchors, 9a, 9b, 9c and 9d, define a convex quadrilateral "Q", having vertices 12a, 12b, 12c and 12d and a perimeter 13. Bimedians 14 and 15 (line segments joining the midpoints of opposite sides of quadrilateral) intersect to define the vertex centroid "VC" of quadrilateral Q. In Figure 3, the vertices of the quadrilateral Q are shown as having angles of approximately 90°. It can be understood that the points of attachment 10a, 10b, 10c and 10d of the anchors 9a, 9b, 9c and 9d may be varied from a rectangular, to define other quadrilateral configurations, such as a trapezium, trapezoid, parallelogram, kite or rhombus. By way of example, the interior angles of the quadrilateral may vary from 80° to 100°, 70° to 110°, or even 60° to 120°.

A fifth anchor, anchor 16 has a point of attachment 17 to back 4 of plate 2. Point of attachment 17 is located within the perimeter 13 of quadrilateral Q. Anchor 16 is provided with a foot 18, opposite point of attachment 17. In the embodiment of the invention illustrated, point of attachment 17 of anchor 16 is located on bimedian 15. It is believed to be advantageous to counteract the tendency of plate 2 to distort when supporting a ledge to locate point of attachment 17 above bimedian 14, that is, between bimedian 14 and top edge 5.

As shown in Figures 1 and 3, plate 2 is provided with keyholes 19, 20, 21 and 22, which extend through plate 2 from front 3 to back 4. Each of keyholes 19, 20, 21 and 22 is characterized by a wide end 23a, 23b, 23c and 23d and a narrow end, 24a, 24b, 24c and 24d, respectively. In the embodiment of the invention illustrated, keyholes 19 and 20 are positioned in plate 2 within the perimeter 13 of quadrilateral Q. Additionally, keyholes 19 and 20 may be positioned above bimedian 14, that is, between bimedian 14 and top edge 5 of plate 2. The point of attachment 17 of anchor 16 is positioned laterally between keyholes 19 and 20. Keyholes 21 and 22 may also be positioned within perimeter 13 of quadrilateral Q, and keyholes 21 and 22 may be positioned below bimedian 14, that is, between bimedian 14 and the bottom edge 6 of plate 2. The point of attachment 17 of anchor 16 is positioned laterally between keyholes 21 and 22. Also within the scope of the present invention is the possibility of locating keyholes 21 and 22 outside of perimeter 13 of quadrilateral Q. For example, keyholes 21 and 22 could be positioned closer to bottom edge 6 of plate 2, or anchors 9c and 9d could be positioned closer to top edge 5 of plate 2, or both.

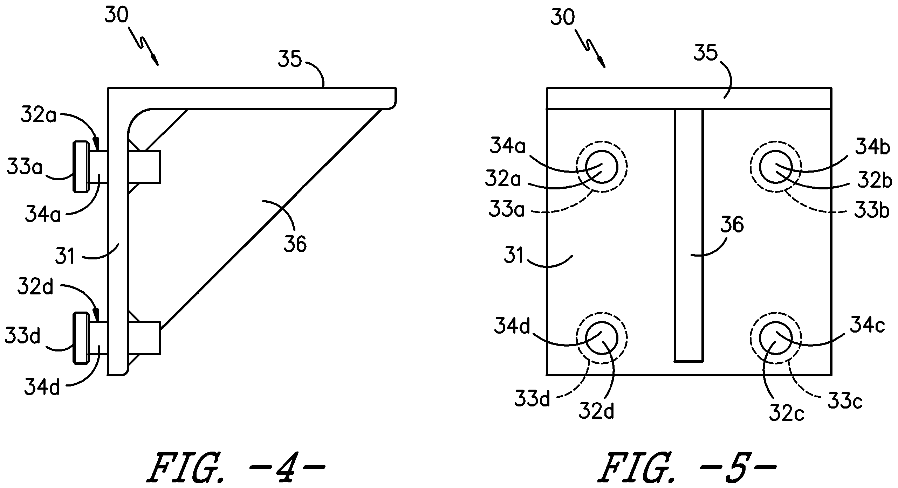

Referring to Figures 4 and 5, ledge 30 has back plate 31, with studs 32a, 32b, 32c and 32d, attached to plate 31. Each of studs 32a, 32b, 32c and 32d is provided with a head 33a, 33b, 33c and 3d, and a shaft 34a, 34b, 34c and 34d, respectively. In the embodiment illustrated, shafts 34a, 34b, 34c and 34d extend through back plate 31, for additional strength.

Ledge 30 has base 35 attached to back plate 31, for supporting a horizontal beam or other component of a structure. Back plate 31 and base 35 can be a unitary part, such as angle iron. Generally, base 35 and back plate 31 will be at a right angle (90°), but the angle of orientation may vary, as required, for a particular situation. Gusset 36 joins back plate 31 and base 35 for additional support. Gusset 36 may be a single plate attached at a 45° angle between back plate 31 and base 35. Alternatively, base 35 may be supported by multiple gussets connecting base 35 to back plate 31. By way of further example, base 35 may be supported by the rectangular sides of a steel "box", as is known in the art.

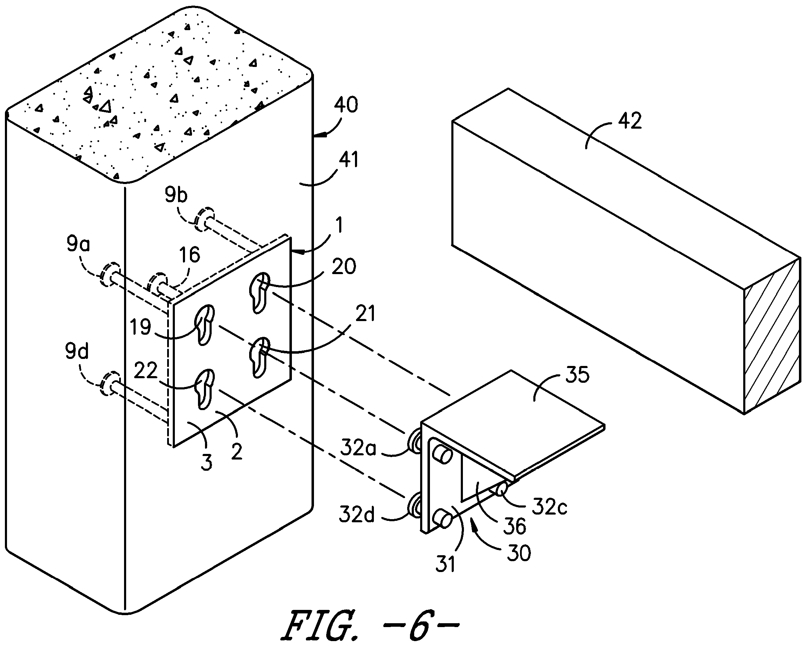

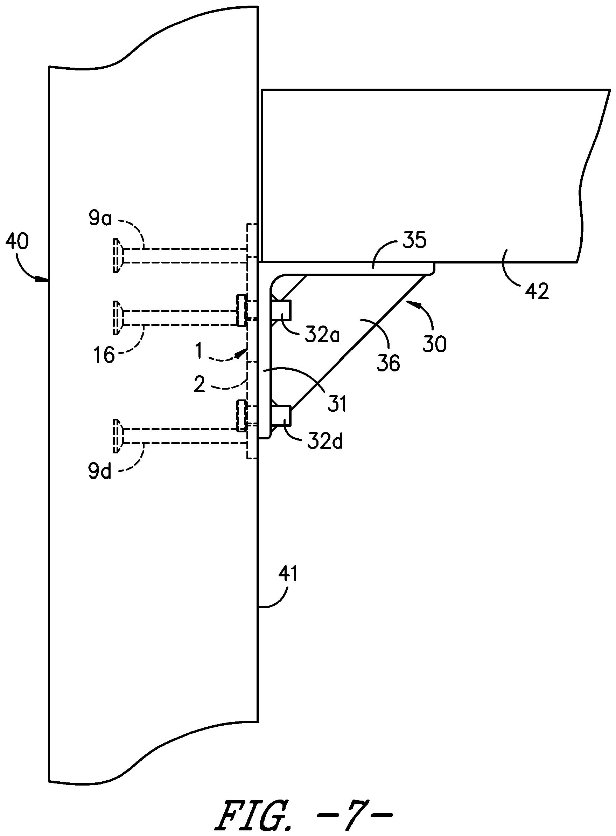

Figures 6 and 7 show a concrete component 40 of a structure, with mount 1 embedded therein, with front 3 of plate 2 parallel to and substantially flush with vertical face 41 of component 40. A void in the concrete is provided behind each of keyholes 19, 20, 21 and 22, by use of a suitable block out form or recess member at the time the concrete component is cast with mount 1 embedded therein, as is known in the art. Studs 32a, 32b, 32c and 32d extending outward from back plate 31 of ledge 30 engage the corresponding keyholes in plate 2 of mount 1. Beam 42 is supported by base 35 of ledge 30.

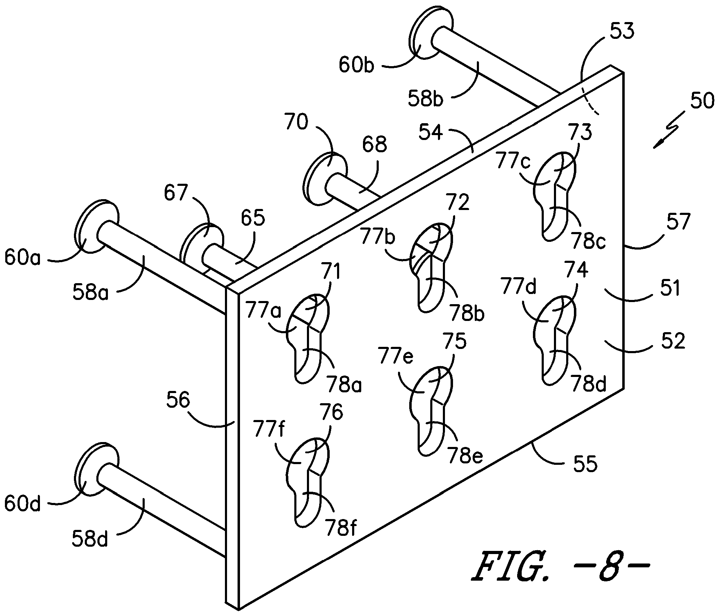

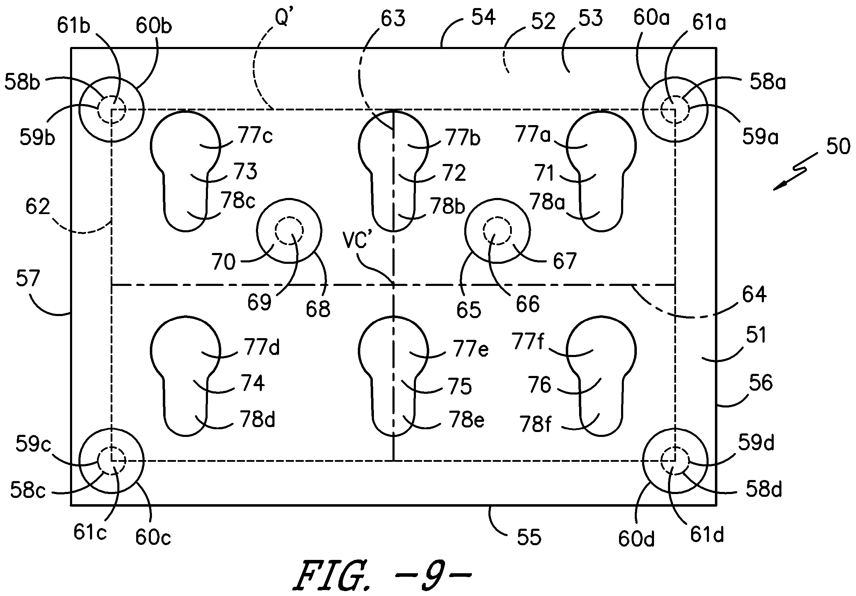

Referring to Figures 8 and 9, an embodiment of the invention having six keyhole slots and six anchors is disclosed. Mount 50 has plate 51, front 52, back 53, top edge 54, bottom edge 55, side edge 56 and opposite side edge 57. Anchors 58a, 58b, 58c and 58d are attached to the back 53 of plate 51 at points of attachment 59a, 59b, 59c and 59d, respectively. Opposite the points of attachment, each of anchors 58a, 58b, 58c and 58d is provided with a foot, identified as 60a, 60b, 60c and 60d, respectively, to increase the pull out force required to remove the anchors, when the anchors are embedded in a concrete component.

The four anchors, 58a, 58b, 58c and 58d, define a convex quadrilateral "Q"', having vertices 61a, 61b, 61c and 61d and a perimeter 62. Bimedians 63 and 64 (line segments joining the midpoints of opposite sides of quadrilateral) intersect to define the vertex centroid "VC'" of quadrilateral Q'. In Figure 9, the vertices of the quadrilateral Q' are shown as having angles of approximately 90°. It can be understood that the points of attachment 59a, 59b, 59c and 59d of the anchors 58a, 58b, 58c and 58d may be varied from a rectangular, to define other quadrilateral configurations, such as a trapezium, trapezoid, parallelogram, kite or rhombus. By way of example, the interior angles of the quadrilateral may vary from 80° to 100°, 70° to 110°, or even 60° to 120°.

A fifth anchor, anchor 65 has a point of attachment 66 to back 53 of plate 51. Point of attachment 66 is located within the perimeter 62 of quadrilateral Q'. Anchor 65 is provided with a foot 67, opposite point of attachment 66. In the embodiment of the invention illustrated, point of attachment 66 of anchor 65 is located above bimedian 64, that is, between bimedian 64 and top edge 54, to counteract the tendency of plate 51 to distort when supporting a ledge.

Mount 50 is also provided with a six anchor, anchor 68, having a point of attachment 69 to back 53 of plate 51. Point of attachment 69 is located within the perimeter 62 of quadrilateral Q'. Anchor 68 is provided with a foot 70, opposite point of attachment 69. In the embodiment of the invention illustrated, point of attachment 69 of anchor 68 is located above bimedian 64, that is, between bimedian 64 and top edge 54, to counteract the tendency of plate 51 to distort when supporting a ledge.

As shown in Figures 8 and 9, plate 51 is provided with keyholes 71, 72, 73, 74, 75 and 76, which extend through plate 51 from front 52 to back 53. Each of keyholes 71, 72, 73, 74, 75 and 76 is characterized by a wide end, 77a, 77b, 77c, 77d, 77e and 77f, and a narrow end, 78a, 78b, 78c, 78d, 78e and 78f, respectively. In the embodiment of the invention illustrated, keyholes 71, 72 and 73 are positioned in plate 51 within the perimeter 62 of quadrilateral Q'. Additionally, keyholes 71, 72 and 73 may be positioned above bimedian 64, that is, between bimedian 64 and top edge 54 of plate 51. The point of attachment of anchor 65 is positioned laterally between keyholes 71 and 72. The point of attachment of anchor 68 is positioned laterally between keyholes 72 and 73. Keyholes 74, 75 and 76 may also be positioned within perimeter 62 of quadrilateral Q', and keyholes 74, 75 and 76 may be positioned below bimedian 64, that is, between bimedian 44 and the bottom edge 55 of plate 51. The point of attachment 66 of anchor 65 may be positioned laterally between keyholes 74 and 75. The point of attachment 69 of anchor 68 may be positioned laterally between keyholes 75 and 76. Also within the scope of the present invention is the possibility of locating any of keyholes 71, 72, 73, 74, 75 and 76 outside of perimeter 62 of quadrilateral Q'. For example, keyholes 74, 75 and 76 could be positioned closer to bottom edge 55 of plate 51, or anchors 58a and 58d could be positioned closer to top edge 54 of plate 51, or both.

Mount 50 may be embedded in a concrete component, with plate 51 parallel to and substantially flush with a vertical face of the concrete component, as shown in Figures 6 and 7 with regard to mount 1. Additionally, ledge 80 may engage mount 50, as shown in Figures 6 and 7 with regard to mount 1 and ledge 30.

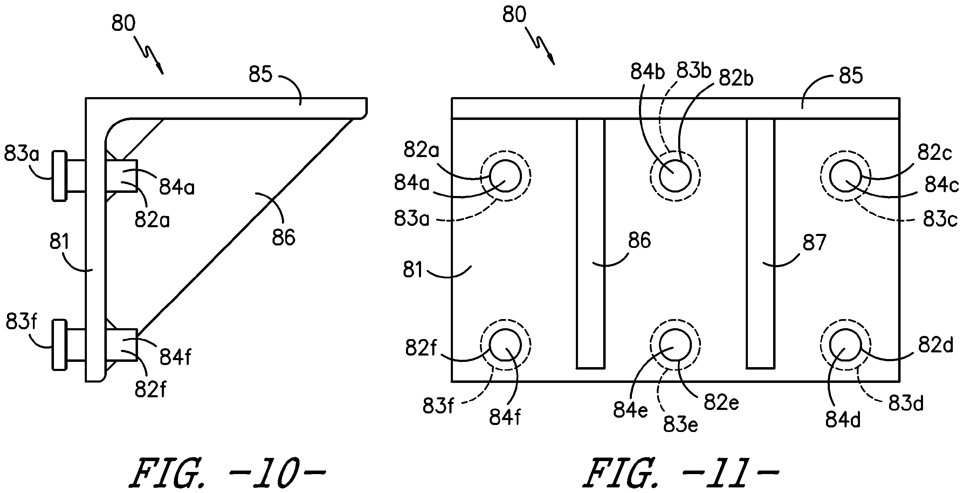

Referring to Figures 10 and 11, ledge 80 has backplate 81, with studs 82a, 82b, 82c, 82d, 82e and 82f, attached to plate 81. Each of studs 82a, 82b, 82c, 82d, 82e and 82f is provided with a head 83a, 83b, 83c, 83d, 83e and 83f and a shaft 84a, 84b, 84c, 84d, 84e and 84f, respectively. In the embodiment illustrated, shafts 84a, 84b, 84c, 84d, 84e and 84f extend through backplate 81, for additional strength.

Ledge 80 has base 85 attached to back plate 31, for supporting a horizontal beam or other component of a structure. Base 85 and back plate 31 may be a unitary part, such as angle iron. Generally, base 85 and back plate 81 will be at a right angle (90°), but the angle of orientation may vary, as required, for a particular situation. Gussets 86 and 87 join back plate 81 and base 85 for additional support. Gussets 86 and 87 may be attached at a 45° angle between back plate 81 and base 85.

There are, of course, many alternative embodiments and modifications, which are intended to be included within the following claims.

## Claims

1. A mount (1) for a ledge, which together form a corbel system, comprising:
(a) a plate (2) having a front (3), a back (4), a top edge (5), a bottom edge (6), a first side edge (7), a second side edge (8), and first and second keyhole slots (19-20) extending through the plate from the front to the back;
(b) (i) a first anchor (9a) having an end attached to the back of the plate at a first point of attachment and extending outward from the back of the plate, (ii) a second anchor (9b) having an end attached to the back of the plate at a second point of attachment and extending outward from the back of the plate, (iii) a third anchor (9c) having an end attached to the back of the plate at a third point of attachment and extending outward from the back of the plate, and (iv) a fourth anchor (9d) having an end attached to the back of the plate at a fourth point of attachment and extending outward from the back of the plate, wherein the first, second, third and fourth points of attachment define the vertices of a convex quadrilateral; and **characterized by**
(c) a fifth anchor (16) having an end attached to the back of the plate at a fifth point of attachment and extending outward from the back of the plate, wherein the fifth point of attachment is positioned within a perimeter of the convex quadrilateral.

2. The mount of claim 1, wherein the first and second keyhole slots (19-20) are positioned within the perimeter of the convex quadrilateral.

3. The mount of claim 2, wherein the fifth point of attachment of the fifth anchor (16) is laterally positioned between the first and second keyhole slots.

4. The mount of claim 2 or 3, wherein the plate further comprises third and fourth keyhole (21, 22) slots positioned within the perimeter of the convex quadrilateral, and the fifth anchor is laterally positioned between the first and second keyhole slots and the third and fourth keyhole slots.

5. The mount of one of the preceding claims, wherein the convex quadrilateral defines a vertex centroid (VC), and the fifth point of attachment of the fifth anchor is positioned between the top of the plate and the vertex centroid.

6. The mount of one of the preceding claims, wherein the plate is rectangular, and the convex quadrilateral is rectangular.

7. The mount of one of the preceding claims, wherein the convex quadrilateral has interior angles that are each from 60° to 120°, preferably wherein the convex quadrilateral has interior angles that are each from 70° to 110°, even more preferably wherein the convex quadrilateral has interior angles that are each from 80° to 100°.

8. A corbel system for supporting a beam, comprising:
(a) an upright concrete component (40) having a vertical face (41);
(b) the mount (1) of one of the preceding claims, the mount having the plate positioned parallel to the face of the concrete component, the first anchor having the end embedded in the concrete component, the second anchor having the end embedded in the concrete component, the third anchor having the end embedded in the concrete component, the fourth anchor having the end embedded in the concrete component, and the fifth anchor having the end embedded in the concrete component, and
(c) a ledge (30) having (i) a back plate (31) aligned parallel to the mount plate, with first and second studs engaging the first and second keyholes of the mount; (ii) a base (35) for supporting the beam, wherein the base is attached to the back plate; and (iii) a gusset (36) attached to the back plate and the base.

9. The corbel system of claim 8, wherein the first and second keyhole slots are positioned within the perimeter of the convex quadrilateral.

10. The corbel system of claim 9, wherein the fifth point of attachment of the fifth anchor is laterally positioned between the first and second keyhole slots.

11. The corbel system of claim 9 or 10, wherein the mount plate further comprises third and fourth keyhole slots positioned within the perimeter of the convex quadrilateral, and the fifth anchor is laterally positioned between the first and second keyhole slots and the third and fourth keyhole slots.

12. The corbel system of one of claims 8 to 11, wherein the convex quadrilateral defines a vertex centroid, and the fifth point of attachment of the fifth anchor is positioned between the top of the plate and the vertex centroid.

13. The corbel system of one of claims 8 to 12, wherein the convex quadrilateral has interior angles that are each from 70° to 110°.

14. The corbel system of one of claims 8 to 13, wherein the first, second, third, fourth and fifth anchors are headed rebar.

15. The mount of one of claims 1 to 7, wherein the first, second, third, fourth and fifth anchors are headed rebar.

## Patentansprüche

1. Halterung (1) für eine Leiste, die zusammen ein Konsolensystem bilden, umfassend:
(a) eine Platte (2), die eine Vorderseite (3), eine Rückseite (4), eine Oberkante (5), eine Unterkante (6), eine erste Seitenkante (7), eine zweite Seitenkante (8) und einen ersten und einen zweiten Schlüssellochschlitz (19-20), die sich von vorne nach hinten durch die Platte erstrecken, aufweist;
(b) (i) einen ersten Anker (9a), der ein Ende aufweist, das an der Rückseite der Platte an einem ersten Befestigungspunkt befestigt ist und sich von der Rückseite der Platte nach außen erstreckt, (ii) einen zweiten Anker (9b), der ein Ende aufweist, das an der Rückseite der Platte an einem zweiten Befestigungspunkt befestigt ist und sich von der Rückseite der Platte nach außen erstreckt, (iii) einen dritten Anker (9c), der ein Ende aufweist, das an der Rückseite der Platte an einem dritten Befestigungspunkt befestigt ist und sich von der Rückseite der Platte nach außen erstreckt, und (iv) einen vierten Anker (9d), der ein Ende aufweist, das an der Rückseite der Platte an einem vierten Befestigungspunkt befestigt ist und sich von der Rückseite der Platte nach außen erstreckt, wobei der erste, zweite, dritte und vierte Befestigungspunkt die Eckpunkte eines konvexen Vierecks definieren; und **gekennzeichnet durch**
(c) einen fünften Anker (16), der ein Ende aufweist, das an der Rückseite der Platte an einem fünften Befestigungspunkt befestigt ist und sich von der Rückseite der Platte nach außen erstreckt, wobei der fünfte Befestigungspunkt innerhalb eines Umfangs des konvexen Vierecks positioniert ist.

2. Halterung nach Anspruch 1, wobei der erste und der zweite Schlüssellochschlitz (19-20) innerhalb des Umfangs des konvexen Vierecks positioniert sind.

3. Halterung nach Anspruch 2, wobei der fünfte Befestigungspunkt des fünften Ankers (16) seitlich zwischen dem ersten und dem zweiten Schlüssellochschlitz positioniert ist.

4. Halterung nach Anspruch 2 oder 3, wobei die Platte weiter einen dritten und vierten Schlüssellochschlitz (21, 22) umfasst, die innerhalb des Umfangs des konvexen Vierecks positioniert sind, und der fünfte Anker seitlich zwischen dem ersten und dem zweiten Schlüssellochschlitz und dem dritten und vierten Schlüssellochschlitz positioniert ist.

5. Halterung nach einem der vorstehenden Ansprüche, wobei das konvexe Viereck einen Scheitelpunktschwerpunkt (VC) definiert und der fünfte Befestigungspunkt des fünften Ankers zwischen der Oberseite der Platte und dem Scheitelpunktschwerpunkt positioniert ist.

6. Halterung nach einem der vorstehenden Ansprüche, wobei die Platte rechteckig ist und das konvexe Viereck rechteckig ist.

7. Halterung nach einem der vorstehenden Ansprüche, wobei das konvexe Viereck Innenwinkel aufweist, die jeweils zwischen 60° und 120° betragen, wobei vorzugsweise das konvexe Viereck Innenwinkel aufweist, die jeweils zwischen 70° und 110° betragen, wobei noch bevorzugter das konvexe Viereck Innenwinkel aufweist, die jeweils zwischen 80° und 100° betragen.

8. Konsolensystem zum Tragen eines Balkens, umfassend:
(a) ein aufrechtes Betonbauteil (40), das eine vertikale Fläche (41) aufweist;
(b) die Halterung (1) nach einem der vorstehenden Ansprüche, wobei die Platte der Halterung parallel zur Fläche des Betonbauteils positioniert ist, das Ende des ersten Ankers in das Betonbauteil eingebettet ist, das Ende des zweiten Ankers in das Betonbauteil eingebettet ist, das Ende des dritten Ankers in das Betonbauteil eingebettet ist, das Ende des vierten Ankers in das Betonbauteil eingebettet ist und das Ende des fünften Ankers in das Betonbauteil eingebettet ist, und
(c) eine Leiste (30), die Folgendes aufweist:
(i) eine Rückplatte (31), die parallel zur Halterungsplatte ausgerichtet ist, wobei ein erster und ein zweiter Bolzen in das erste und das zweite Schlüsselloch der Halterung eingreifen; (ii) eine Basis (35) zum Tragen des Balkens, wobei die Basis an der Rückplatte befestigt ist; und (iii) einen Keil (36), der an der Rückplatte und der Basis befestigt ist.

9. Konsolensystem nach Anspruch 8, wobei der erste und der zweite Schlüssellochschlitz innerhalb des Umfangs des konvexen Vierecks positioniert sind.

10. Konsolensystem nach Anspruch 9, wobei der fünfte Befestigungspunkt des fünften Ankers seitlich zwischen dem ersten und dem zweiten Schlüssellochschlitz positioniert ist.

11. Konsolensystem nach Anspruch 9 oder 10, wobei die Halterungsplatte weiter einen dritten und einen vierten Schlüssellochschlitz umfasst, die innerhalb des Umfangs des konvexen Vierecks positioniert sind, und der fünfte Anker seitlich zwischen dem ersten und dem zweiten Schlüssellochschlitz und dem dritten und dem vierten Schlüssellochschlitz positioniert ist.

12. Konsolensystem nach einem der Ansprüche 8 bis 11, wobei das konvexe Viereck einen Scheitelpunktschwerpunkt definiert und der fünfte Befestigungspunkt des fünften Ankers zwischen der Oberseite der Platte und dem Scheitelpunktschwerpunkt positioniert ist.

13. Konsolensystem nach einem der Ansprüche 8 bis 12, wobei das konvexe Viereck Innenwinkel aufweist, die jeweils zwischen 70° und 110° betragen.

14. Konsolensystem nach einem der Ansprüche 8 bis 13, wobei der erste, zweite, dritte, vierte und fünfte Anker geführte Bewehrungsstäbe sind.

15. Halterung nach einem der Ansprüche 1 bis 7, wobei der erste, zweite, dritte, vierte und fünfte Anker geführte Bewehrungsstäbe sind.

## Revendications

1. Support (1) pour une corniche, qui forment ensemble un système d'encorbellement, comprenant :
(a) une plaque (2) présentant un côté avant (3), un côté arrière (4), un bord supérieur (5), un bord inférieur (6), un premier bord latéral (7), un second bord latéral (8) et une première et une deuxième encoches en trou de serrure (19-20) qui s'étendent à travers la plaque de l'avant vers l'arrière ;
(b) (i) un premier ancrage (9a) dont l'extrémité est fixée au côté arrière de la plaque en un premier point de fixation et qui s'étend vers l'extérieur à partir du côté arrière de la plaque, (ii) un deuxième ancrage (9b) dont l'extrémité est fixée au côté arrière de la plaque en un deuxième point de fixation et qui s'étend vers l'extérieur à partir du côté arrière de la plaque, (iii) un troisième ancrage (9c) dont l'extrémité est fixée au côté arrière de la plaque en un troisième point de fixation et qui s'étend vers l'extérieur à partir du côté arrière de la plaque, et (iv) un quatrième ancrage (9d) dont l'extrémité est fixée au côté arrière de la plaque en un quatrième point de fixation et qui s'étend vers l'extérieur à partir du côté de la plaque, dans lequel les premier, deuxième, troisième et quatrième points de fixation définissent les sommets d'un quadrilatère convexe ; et **caractérisé par**
(c) un cinquième ancrage (16) dont l'extrémité est fixée au côté arrière de la plaque en un cinquième point de fixation et qui s'étend vers l'extérieur à partir du côté arrière de la plaque, dans lequel le cinquième point de fixation est situé à l'intérieur d'un périmètre du quadrilatère convexe.

2. Support selon la revendication 1, dans lequel les première et deuxième encoches en trou de serrure (19-20) sont situées à l'intérieur du périmètre du quadrilatère convexe.

3. Support selon la revendication 2, dans lequel le cinquième point de fixation du cinquième ancrage (16) est positionné latéralement entre les première et seconde encoches en trou de serrure.

4. Support selon la revendication 2 ou la revendication 3, dans lequel la plaque comporte en outre des troisième et quatrième encoches en trou de serrure (21, 22) qui sont formées à l'intérieur du périmètre du quadrilatère convexe, et le cinquième ancrage est agencé latéralement entre les première et deuxième encoches en trou de serrure et les troisième et quatrième encoches en trou de serrure.

5. Support selon l'une des revendications précédentes, dans lequel le quadrilatère convexe définit un vertex centroïde (VC), et le cinquième point de fixation du cinquième ancrage est positionné entre le sommet de la plaque et le vertex centroïde.

6. Support selon l'une des revendications précédentes, dans lequel la plaque est rectangulaire et le quadrilatère convexe est rectangulaire.

7. Support selon l'une des revendications précédentes, dans lequel le quadrilatère convexe présente des angles intérieurs compris chacun entre 60° et 120°, de préférence dans lequel le quadrilatère convexe présente des angles intérieurs compris chacun entre 70° et 110°, et de préférence encore dans lequel le quadrilatère convexe présente des angles intérieurs compris chacun entre 80° et 100°.

8. Système d'encorbellement pour supporter une poutre, comprenant :
(a) un élément vertical en béton (40) présentant une face verticale (41) ;
(b) le support (1) selon l'une des revendications précédentes, le support présentant la plaque positionnée parallèlement à la face de l'élément en béton, le premier ancrage ayant l'extrémité encastrée dans l'élément en béton, le deuxième ancrage ayant l'extrémité encastrée dans l'élément en béton, le troisième ancrage ayant l'extrémité encastrée dans l'élément en béton, le quatrième ancrage ayant l'extrémité encastrée dans l'élément en béton, et le cinquième ancrage ayant l'extrémité encastrée dans l'élément en béton, et
(c) une corniche (30), comprenant : (i) une plaque arrière (31) alignée parallèlement à la plaque de montage, avec un premier et un second goujons qui s'engagent à l'intérieur des premier et deuxième trous de serrure du support ; (ii) une base (35) pour supporter la poutre, dans lequel la base est fixée à la plaque arrière ; et (iii) un gousset (36) qui est attaché à la plaque arrière ainsi qu'à la base.

9. Système d'encorbellement selon la revendication 8, dans lequel les première et deuxième encoches en trou de serrure sont situées à l'intérieur du périmètre du quadrilatère convexe.

10. Système d'encorbellement selon la revendication 9, dans lequel le cinquième point de fixation du cinquième ancrage est positionné latéralement entre les première et deuxième encoches en trou de serrure.

11. Système d'encorbellement selon la revendication 9 ou la revendication 10, dans lequel la plaque de montage comporte en outre des troisième et quatrième encoches en trou de serrure qui sont formées à l'intérieur du périmètre du quadrilatère convexe, et le cinquième ancrage est agencé latéralement entre les première et deuxième encoches en trou de serrure et les troisième et quatrième encoches en trou de serrure.

12. Système d'encorbellement selon l'une des revendications 8 à 11, dans lequel le quadrilatère convexe définit un vertex centroïde, et le cinquième point de fixation du cinquième ancrage est positionné entre le sommet de la plaque et le vertex centroïde.

13. Système d'encorbellement selon l'une des revendications 8 à 12, dans lequel le quadrilatère convexe présente des angles intérieurs compris chacun entre 70° et 110°.

14. Système d'encorbellement selon l'une des revendications 8 à 13, dans lequel les premier, deuxième, troisième, quatrième et cinquième ancrages sont des barres d'armature à tête.

15. Support selon l'une des revendications 1 à 7, dans lequel les premier, deuxième, troisième, quatrième et cinquième ancrages sont des barres d'armature à tête.
